# EUROPEAN PATENT SPECIFICATION

(11) **EP 4 470 709 B1**
(45) Date of publication and mention of the grant of the patent: **21.10.2026**
(21) Application number: 22924182.3
(22) Date of filing: 22.12.2022
(51) Int. Cl.: B23K 26/352, B23K 26/082, B23K 26/14, B23K 26/362

(54) **LASER PROCESSING MACHINE, LASER PROCESSING METHOD, AND LASER PROCESSING PROGRAM**
LASERBEARBEITUNGSMASCHINE, LASERBEARBEITUNGSVERFAHREN UND LASERBEARBEITUNGSPROGRAMM
APPAREIL D'USINAGE PAR LASER, PROCÉDÉ D'USINAGE PAR LASER, ET PROGRAMME D'USINAGE PAR LASER

(30) Priority: 26.01.2022 JP 2022009989
(43) Date of publication of application: 04.12.2024
(73) Proprietor: Amada Co., Ltd., Isehara-shi, Kanagawa 259-1196 (JP)
(72) Inventor: HARUMIYA Bunyou, Isehara-shi, Kanagawa 259-1196 (JP); KAWAHARA Chiaki, Isehara-shi, Kanagawa 259-1196 (JP)
(74) Representative: Grünecker Patent- und Rechtsanwälte PartG mbB
(86) International application number: PCT/JP2022/047453
(87) International publication number: WO 2023/145335

(56) References cited:
- CN-A- 109 534 286
- CN-A- 113 579 480
- JP-A- 2004 130 355
- JP-A- 2008 006 466
- JP-A- 2009 083 249
- JP-A- 2017 094 388
- JP-A- 2017 094 388
- JP-A- H07 185 856
- JP-A- H10 175 084

## Description

The present invention relates to a laser processing machine, a laser processing method, and a laser processing program, see claims 1, 10 and 12.

### Background Art

In laser marking devices of the related art that mark, in a surface of a workpiece, a two-dimensional code in which a first cell as a unit irradiation area and a second cell as a unit non-irradiation area are arranged in a matrix according to a desired array pattern, a known laser marking device is provided with a laser light source that emits a laser beam, marking sequence control means to output marking data for marking each first cell in the workpiece according to a sequence based on vertical and horizontal numberings of the matrix corresponding to each first cell, and a galvano scanner that sequentially receives the marking data and sequentially marks each first cell in the surface of the workpiece (Patent Literature 1 and the like).

In the laser marking device of Patent Literature 1, when a plurality of the first cells are adjacent to each other either vertically or horizontally in the matrix, the marking sequence control means outputs the marking data of the first cells in a sequence that does not mark the adjacent first cells consecutively. JP 2017 094388 A discloses a laser processing device according to the preamble of claim 1. CN 109534286 A uses a femtosecond laser micro-nano machining table to perform two orthogonal machining scans on a material surface to generate nanostructures. JP 2004 130355 A discloses technological background.

### Citation List

### Patent Literature

Patent Literature 1: JP 2001-232848 A

### Summary

### Technical Problem

However, the laser marking device of Patent Literature 1 has a problem in that when marking a cell that is larger than an irradiation diameter of the laser beam, for example, the first cell is marked by radiating the laser beam while meandering in a spiral pattern inside the first cell, and thus the marking of each first cell takes a long time.

Aspects of the present invention are a laser processing machine, a laser processing method, and a laser processing program capable of engraving a two-dimensional code with high reading accuracy in a short time.

### Solution to Problem

A laser processing machine according to a first aspect of the present invention is a laser processing as defined in claim 1, and configured to engrave, in a surface of a workpiece, a matrix-type two-dimensional code in which a first cell as a unit irradiation area and a second cell as a unit non-irradiation area are arranged in a desired array pattern in a first direction and a second direction orthogonal to the first direction, the laser processing machine being provided with a laser processing head configured to irradiate the workpiece with a laser beam, a moving mechanism configured to move the laser beam radiated from the laser processing head in the first direction and the second direction, and a control unit configured to control the moving mechanism, wherein the laser processing machine is configured to irradiate each first cell with the laser beam along both the first direction and the second direction.

A laser processing method according to a second aspect of the present invention is a laser processing method for engraving, in a surface of a workpiece, a matrix-type two-dimensional code as defined in claim 10, in which a first cell as a unit irradiation area and a second cell as a unit non-irradiation area are arranged in a desired array pattern in a first direction and a second direction orthogonal to the first direction, wherein each first cell is irradiated with a laser beam along both the first direction and the second direction.

A laser processing program according to a third aspect of the present invention is a laser processing program for engraving, in a surface of a workpiece, a matrix-type two-dimensional code in which a first cell as a unit irradiation area and a second cell as a unit non-irradiation area are arranged in a desired array pattern in a first direction and a second direction orthogonal to the first direction as defined in claim 12, the laser processing program causing a control unit to execute an engraving process for irradiating each first cell with a laser beam along both the first direction and the second direction.

According to a laser processing machine, a laser processing method, and a laser processing program as in these three aspects of the present invention, the first cell is irradiated with the laser beam along both the first direction and the second direction, whereby a two-dimensional code with high reading accuracy can be engraved in a short time.

### Advantageous Effects of Invention

According to a laser processing machine, a laser processing method, and a laser processing program of the present invention, a two-dimensional code with high reading accuracy can be engraved in a short time.

### Brief Description of Drawings

[Figure 1] Figure 1 is a schematic diagram illustrating a laser processing machine according to an embodiment of the present invention.
[Figure 2] Figure 2 is a schematic diagram illustrating a laser processing head of the present embodiment.
[Figure 3] Figure 3 is a functional block diagram schematically illustrating a control device of the present embodiment.
[Figure 4] Figure 4 is a diagram illustrating a row and column layout of cells in a matrix-type two-dimensional code of the present embodiment.
[Figure 5] Figure 5 is a diagram illustrating a first processing method by the laser processing machine of the present embodiment.
[Figure 6] Figure 6 is a diagram illustrating the first processing method by the laser processing machine of the present embodiment.
[Figure 7] Figure 7 is a diagram illustrating a second processing method by the laser processing machine of the present embodiment.
[Figure 8] Figure 8 is a diagram illustrating the second processing method by the laser processing machine of the present embodiment.
[Figure 9] Figure 9 is a diagram illustrating a third processing method by the laser processing machine of the present embodiment.
[Figure 10] Figure 10 is a diagram illustrating the third processing method by the laser processing machine of the present embodiment.
[Figure 11] Figure 11 is a diagram illustrating a fourth processing method by the laser processing machine of the present embodiment.
[Figure 12] Figure 12 is a diagram illustrating a laser processing method by a first modification of the laser processing machine of the present embodiment.
[Figure 13] Figure 13 is a diagram illustrating a laser processing method by a third modification of the laser processing machine of the present embodiment.

### Description of Embodiment

Hereinafter, the best embodiment for carrying out the present invention will be described using the drawings. Note that the following embodiment does not limit the invention as in the claims, and not all of the combinations of features described in the embodiment are essential to the solution of the invention.

### [Overall configuration of laser processing machine according to present embodiment]

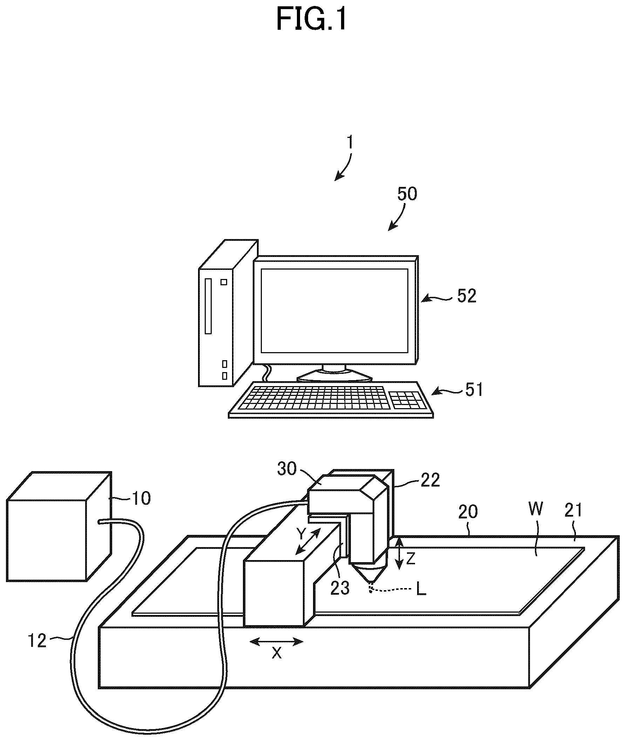

Figure 1 is a schematic diagram illustrating a laser processing machine according to the embodiment of the present invention.

First, Figure 1 will be referenced to give an outline of a laser processing machine 1 according to the embodiment of the present invention. The laser processing machine 1 according to the present embodiment is a laser processing machine that engraves, in a surface of a workpiece W, a matrix-type two-dimensional code in which a first cell as a unit irradiation area and a second cell as a unit non-irradiation area are arranged in a desired array pattern in a first direction and a second direction orthogonal to the first direction.

Note that in the present embodiment, the first direction is a Y-axis direction in Figure 1 and the second direction is an X-axis direction in Figure 1, but the directions are not limited thereto.

A matrix-type two-dimensional code is a two-dimensional code having an array pattern of n rows and m columns (where n and m are integers equal to or greater than 2) in which square first and second cells are plurally arranged in a freely chosen array. Specifically, a matrix-type two-dimensional is a square or rectangular two-dimensional code such as a QR Code^{®} or a Data Matrix.

The laser processing machine 1 includes a laser processing head 30 that irradiates a workpiece W with a laser beam L and a moving mechanism 20 that moves the laser beam L radiated from the laser processing head 30 in a first direction and a second direction, in which each first cell is irradiated with the laser beam L along both the first direction and the second direction. The laser processing machine 1 also includes a laser oscillator 10 that generates and emits the laser beam L, a process fiber 12 that conveys the laser beam L emitted by the laser oscillator 10 to the laser processing head 30, a processing table 21 on which the workpiece W is mounted, a control device 50, and an assist gas supply device (not illustrated).

The laser oscillator 10 generates the laser beam L, and supplies the laser beam L to the laser processing head 30 via the process fiber 12. The laser oscillator suitably used as the laser oscillator 10 is, for example, a type in which a seed light emitted by a laser diode excites and amplifies Yb or the like in a resonator to emit the laser beam L at a predetermined wavelength, or a type that directly uses the laser beam L emitted by a laser diode. Examples of the laser oscillator 10 as a solid-state laser oscillator include a fiber laser oscillator, a YAG laser oscillator, a disk laser oscillator, a DDL oscillator, and the like.

The laser oscillator 10 emits the laser beam L in a 1 µm band with a wavelength of 900 nm to 1100 nm. For example, the DDL oscillator emits the laser beam L with a wavelength of 910 nm to 950 nm, while the fiber laser oscillator emits the laser beam L with a wavelength of 1060 nm to 1080 nm.

The moving mechanism 20 is configured to drive at least one of the laser processing head 30 or the processing table 21 so that the laser processing head 30 and the processing table 21 move relative to one another. Specifically, the moving mechanism 20 includes an X-axis carriage 22 and a Y-axis carriage 23. The X-axis carriage 22 is configured in a gate type, is disposed straddling the processing table 21, and is configured to be freely movable over the processing table 21 in the X-axis direction. The Y-axis carriage 23 is attached to the X-axis carriage 22 and is configured to be freely movable in the Y-axis direction perpendicular to the X-axis direction. Also, the laser processing head 30 is attached to an end of the Y-axis carriage 23. By being provided with such a configuration, the moving mechanism 20 is configured to move the laser processing head 30 in the X-axis direction, the Y-axis direction, or any combined direction of the X and Y axes, along the surface of the workpiece W mounted on the processing table 21.

Note that instead of moving the laser processing head 30 along the surface of the workpiece W, the moving mechanism 20 may also be configured such that a position of the laser processing head 30 is fixed and the workpiece W is moved relative to the laser processing head 30.

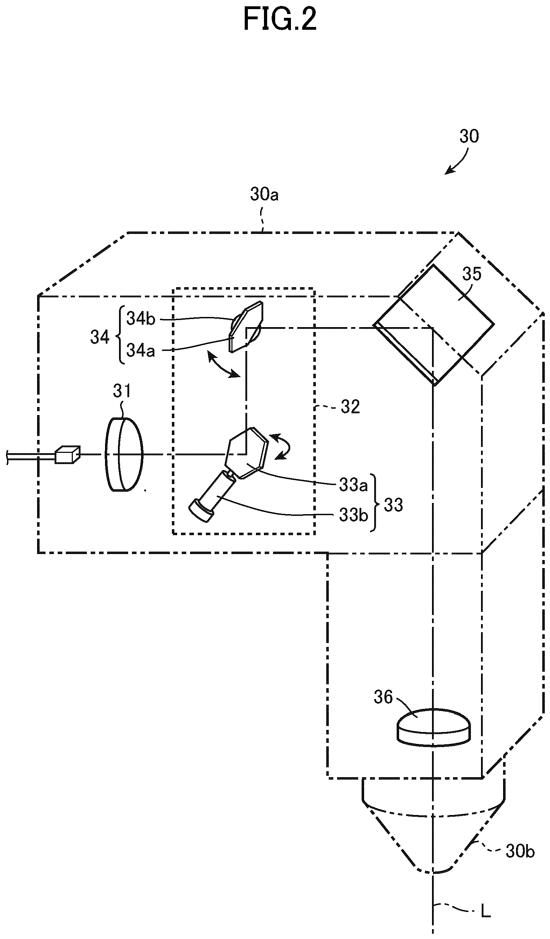

Figure 2 is a schematic diagram illustrating the laser processing head of the present embodiment.

The laser processing head 30 irradiates the workpiece W on the processing table 21 with the laser beam L conveyed from the laser oscillator 10 via the process fiber 12. As illustrated in Figure 2, the laser processing head 30 includes a housing 30a including an irradiation center axis of the laser beam L, and inside this housing 30a, the laser processing head 30 includes a collimating lens 31 entered by the laser beam L emitted from the emitting end of the process fiber 12, a galvano scanner unit 32 that functions as a beam vibrating mechanism, and a bend mirror 35 by which the laser beam L emitted from the galvano scanner unit 32 is reflected downward in a Z-axis direction perpendicular to the X and Y axes. The laser processing head 30 also includes a condensing lens 36 that focuses the laser beam L reflected by the bend mirror 35

A tip portion of the housing 30a is provided with a nozzle 30b having a circular aperture for irradiating the workpiece W with the laser beam L. This nozzle 30b has a nozzle function for directing a flow of gas supplied from the assist gas supply device to the workpiece W coaxially with the laser beam L in order to remove the molten workpiece W, and is detachably provided on the housing 30a.

The condensing lens 36 is configured to move freely in directions approaching the workpiece W and going away from the workpiece W by means of a drive section and a moving mechanism not illustrated, in order to adjust a focal position of the laser beam L.

The galvano scanner unit 32 includes a first scanning section 33 and a second scanning section 34, and is configured to vibrate the laser beam L. The first scanning section 33 includes a first scanning mirror 33a to reflect the laser beam L emitted by the collimating lens 31 and a first drive section 33b to rotate the first scanning mirror 33a to be at a predetermined angle. The second scanning section 34 includes a second scanning mirror 34a to reflect the laser beam L emitted from the first scanning mirror 33a and a second drive section 34b to rotate the second scanning mirror 34a to be at a predetermined angle.

The first drive section 33b and the second drive section 34b can reciprocally vibrate the first scanning mirror 33a and the second scanning mirror 34a in a predetermined angular range, respectively, on the basis of control by the control device 50. By being provided with such a configuration, the galvano scanner unit 32 vibrates the laser beam L radiated from the laser processing head 30 to the workpiece W by reciprocally vibrating one or both of the first scanning mirror 33a and the second scanning mirror 34a.

The galvano scanner unit 32 vibrates the laser beam L in a direction orthogonal to the movement direction of the laser beam L, and may also vibrate the laser beam L in the movement direction of the laser beam L.

Note that the galvano scanner unit 32 is an example of a beam vibrating mechanism, and the beam vibrating mechanism is not limited to the galvano scanner unit 32 that includes the first scanning section 33 and the second scanning section 34.

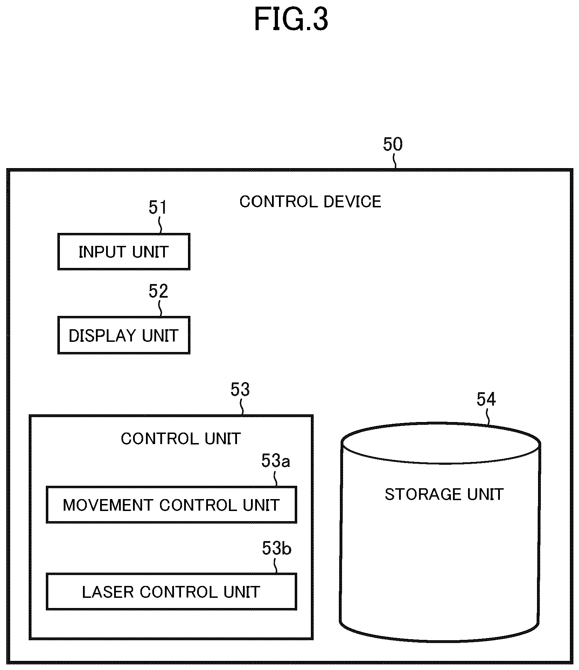

Figure 3 is a functional block diagram schematically illustrating a control device of the present embodiment.

The control device 50 is an example of a control device that controls each section of the laser processing machine 1. As illustrated in Figure 3, the control device 50 includes an input unit 51, a display unit 52, a control unit 53, and a storage unit 54.

The input unit 51 is formed by an input device such as a keyboard, a mouse, a push-button/switch, or the like. By operating the input unit 51, in addition to functions for inputting information normally required in the laser processing machine 1, it is possible to perform operations such as selecting a laser processing program described later in the storage unit 54, for example.

The display unit 52 includes a display as a display device, and in addition to the functions of a display screen normally required in the laser processing machine 1, displays a selection screen for selecting a laser processing program, for example. The display unit 52 may also be configured as a touch panel that includes the functions of the input unit 51. In the case where the display unit 52 is configured as the touch panel, the user can input various information, such as the selection of a laser processing program, to the control device 50 by operating the display unit 52, for example.

Note that the configuration of the input unit 51 and the display unit 52 is not limited to the configuration described above, and insofar as the configuration has equivalent functions in place of the input unit 51 and the display unit 52 (such as remotely usable display means and input means, for example), the configuration is not limited thereto.

The control unit 53 includes a movement control unit 53a to control the moving mechanism 20, and a laser control unit 53b. The movement control unit 53a is configured to control movement operations by the X-axis carriage 22 and the Y-axis carriage 23 of the moving mechanism 20. The laser control unit 53b is configured to be able to control the power, intensity, and focal point adjustment of the laser beam L radiated from the laser processing head 30, and the driving of a first drive section 33b and a second drive section 34b of the galvano scanner unit 32 of the laser processing head 30.

The control unit 53 provided with such a configuration uses the moving mechanism 20 to move the laser beam L along one of either the first direction or the second direction while using the galvano scanner unit 32 to vibrate the laser beam L along the other of either the first direction or the second direction. Also, the control unit 53 controls the moving mechanism 20 such that the first cell is irradiated with the laser beam L along the first direction and then irradiated with the laser beam L again along the second direction.

Specifically, the control unit 53 controls the moving mechanism 20 such that the first cells arranged in either the same row or column are each irradiated with the laser beam L consecutively along the first direction, and then the first cells arranged in the other of either the same row or column are each irradiated with the laser beam L consecutively along the second direction.

The storage unit 54 includes a storage medium such as RAM, ROM, an HDD, or an SSD, and stores various data in a readable and writable way. The storage unit 54 stores programs required for control of each unit of the control device 50. The storage unit 54 also stores a laser processing program for causing the control unit 53 to execute control of the laser processing machine 1. The laser processing program is configured to cause the control unit 53 to perform an engraving process of irradiating each of the first cells with the laser beam L along both the first direction and the second direction.

Also, the laser processing program is configured to cause the control unit 53 to execute a two-time processing process of irradiating the first cells with the laser beam L along the first direction and then irradiating the first cells with the laser beam L again along the second direction.

The laser processing machine 1 provided with the above configuration uses the moving mechanism 20 to move the laser processing head 30 relative to the workpiece W and the galvano scanner unit 32 (beam vibrating mechanism) of the laser processing head 30 to vibrate the laser beam L with which the workpiece W is irradiated, and thereby engrave a highly distinctive matrix-type two-dimensional code on the workpiece W in a short time.

### [Laser processing method according to present embodiment]

A matrix-type two-dimensional code laser processing method by the laser processing machine 1 according to the present embodiment will be described. In outline, the laser processing method according to the present embodiment is a laser processing method that irradiates each of the first cells with the laser beam L along both the first direction and the second direction. The laser processing method according to the present embodiment irradiates the first cells with the laser beam L along the first direction and then irradiates the first cells with the laser beam L again along the second direction.

Next, the laser processing method according to the present embodiment will be described in detail. Note that the laser processing machine 1 according to the present embodiment is also capable of engraving a matrix-type two-dimensional code according to a method other than first through fourth laser processing methods indicated below.

### [First laser processing method]

In outline, in the first processing method, the control unit 53 of the control device 50 controls the moving mechanism 20 to: irradiate, with the laser beam L, first cells in a j-th column (where j is an integer equal to or greater than 1 and less than m) along a first forward direction, and then irradiate, with the laser beam L, first cells in a column other than the j-th column along a first reverse direction; and irradiate, with the laser beam L, first cells in an i-th row (where i is an integer equal to or greater than 1 and less than n) along a second reverse direction, and then irradiate, with the laser beam L, first cells in a row other than the i-th row along a second forward direction.

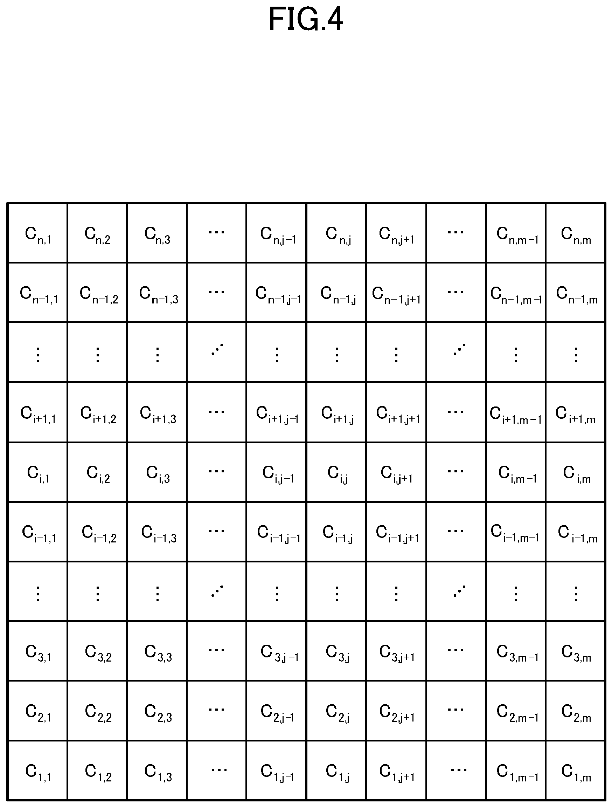

Figure 4 is a diagram illustrating areas of a matrix-type two-dimensional code of the present embodiment.

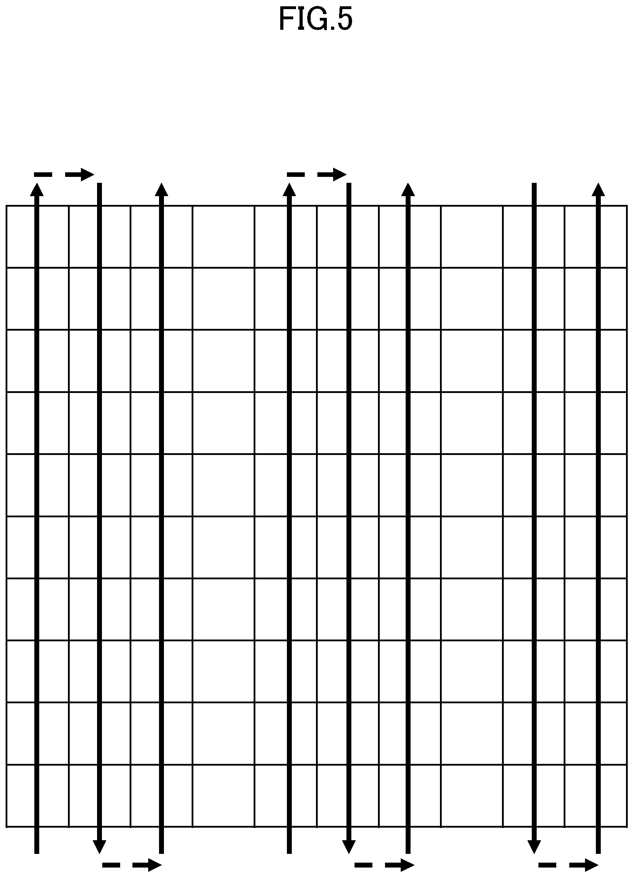

Figure 5 is a diagram illustrating a first processing method by the laser processing machine of the present embodiment. Arrows in Figure 5 indicate the movement directions of the laser processing head 30 (laser beam L).

First, as illustrated in Figures 4 and 5, the laser processing machine 1 irradiates the first cells with the laser beam L from the first direction. Specifically, the laser processing machine 1 uses the moving mechanism 20 to move the laser processing head 30 from cell C_{1,1} to cell C_{n,1} in the first column along the first forward direction, and irradiates each first cell in the first column with the laser beam L. Next, the laser processing machine 1 uses the moving mechanism 20 to move the laser processing head 30 from cell C_{n,2} to cell C_{1,2} in a second column along the first reverse direction, and irradiates each first cell in the second column with the laser beam L. The above is repeated similarly to the m-th column.

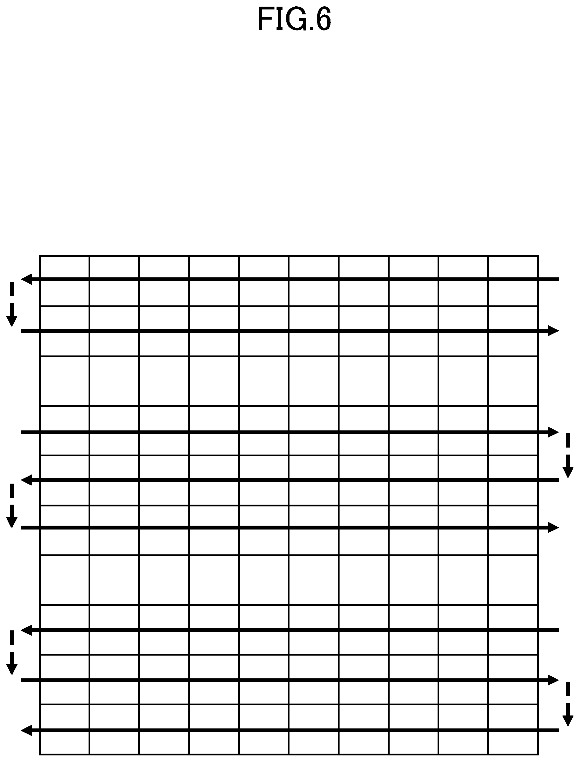

Figure 6 is a diagram illustrating the first processing method by a laser processing machine of the present embodiment. Arrows in Figure 6 indicate the movement directions of the laser processing head 30 (laser beam L).

Thereafter, as illustrated in Figures 4 and 6, the laser processing machine 1 irradiates, with the laser beam L, the first cell from the second reverse and forward directions in order starting from the row containing the cell that the laser processing head 30 (laser beam L) last passed. Specifically, in a case where the matrix-type two-dimensional code has an odd number of columns (m is an odd number), the laser processing machine 1 uses the moving mechanism 20 to move the laser processing head 30 from cell C_{n,m} to cell C_{n,1} in the n-th row along the second reverse direction, and irradiates each first cell in the n-th row with the laser beam L. Next, the laser processing machine 1 uses the moving mechanism 20 to move the laser processing head 30 from cell C_{n-1,1} to cell C_{n-1,m} in the (n-1)-th row along the second forward direction, and irradiates each first cell in the second row with the laser beam L. A matrix-type two-dimensional code is engraved in the workpiece W by similarly repeating the above to the first row.

Also, in the case where the matrix-type two-dimensional code has an even number of columns (m is an even number), the laser processing machine 1 uses the moving mechanism 20 to move the laser processing head 30 from cell C_{1,m} to cell C_{1,1} in the first row along the second reverse direction, and irradiates each first cell in the first row with the laser beam L. Next, the laser processing machine 1 uses the moving mechanism 20 to move the laser processing head 30 from cell C_{2,1} to cell C_{2,m} in the second row along the second forward direction, and irradiates each first cell in the second row with the laser beam L. A matrix-type two-dimensional code is engraved in the workpiece W by similarly repeating the above to the n-th row. According to the above steps, the first laser processing method by the laser processing machine 1 according to the present embodiment is performed.

### [Second laser processing method]

In outline, in the second laser processing method, the control unit 53 of the control device 50 controls the moving mechanism 20 to: irradiate, with the laser beam L, first cells in the j-th column along the first forward direction, and then irradiate, with the laser beam L, first cells in a column other than the j-th column along the first forward direction; and irradiate, with the laser beam L, first cells in the i-th row along the second reverse direction, and then irradiate, with the laser beam L, first cells in a row other than the i-th row along the second reverse direction.

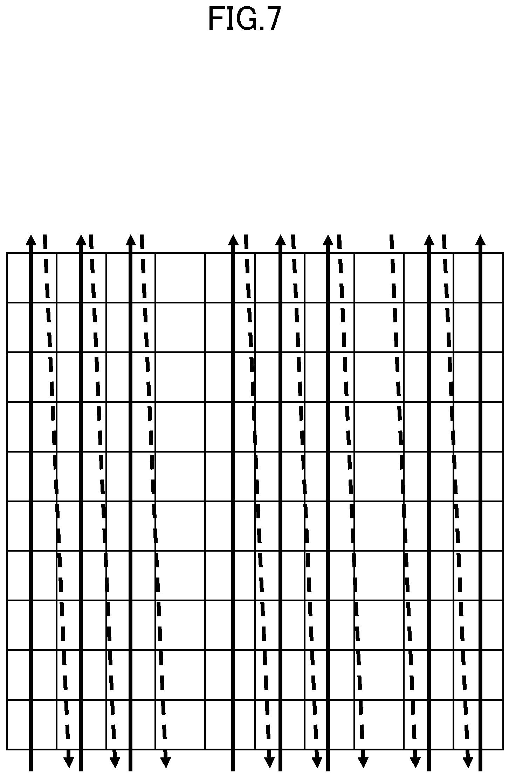

Figure 7 is a diagram illustrating the second processing method by the laser processing machine of the present embodiment. Arrows in Figure 7 indicate the movement directions of the laser processing head 30 (laser beam L).

First, as illustrated in Figures 4 and 7, the laser processing machine 1 irradiates the first cells with the laser beam L from the first direction. Specifically, the laser processing machine 1 uses the moving mechanism 20 to move the laser processing head 30 from cell C_{1,1} to cell C_{n,1} in the first column along the first forward direction, and irradiates each first cell in the first column with the laser beam L. Next, the laser processing machine 1 uses the moving mechanism 20 to move the laser processing head 30 from cell C_{1,2} to cell C_{n,2} in the second column along the first forward direction, and irradiates each first cell in the second column with the laser beam L. The above is repeated similarly to the m-th column.

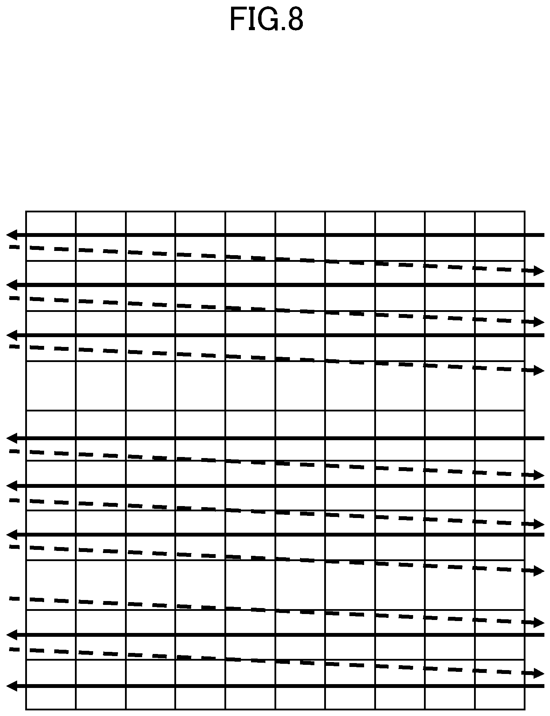

Figure 8 is a diagram illustrating the second processing method by the laser processing machine of the present embodiment. Arrows in Figure 8 indicate the movement directions of the laser processing head 30 (laser beam L).

Thereafter, as illustrated in Figures 4 and 8, the laser processing machine 1 irradiates the first cells with the laser beam L from the second direction. Specifically, the laser processing machine 1 uses the moving mechanism 20 to move the laser processing head 30 from cell C_{n,m} to cell C_{n,1} in the n-th row along the second reverse direction, and irradiates each first cell in the n-th row with the laser beam L. Next, the laser processing machine 1 uses the moving mechanism 20 to move the laser processing head 30 from cell C_{n-1,m} to cell C_{n-1,1} in the (n-1)-th row along the second reverse direction, and irradiates each first cell in the (n-1)-th row with the laser beam L. A matrix-type two-dimensional code is engraved in the workpiece W by similarly repeating the above to the first row. According to the above steps, the second laser processing method by the laser processing machine 1 according to the present embodiment is performed.

In outline, the third processing method and the fourth processing method are laser processing methods that irradiate first cells with the laser beam L in alternation from the first direction and the second direction. The control unit 53 of the control device 50 controls the moving mechanism 20 to, for example:
irradiate, with the laser beam L, first cells in the j-th column along the first direction, and then irradiate, with the laser beam L, first cells in the i-th row along the second direction; and irradiate, with the laser beam L, first cells in a column other than the j-th column along the first direction, and then irradiate, with the laser beam L, first cells in a row other than the i-th row along the second direction. Hereinafter, the third processing method and the fourth processing method will be described in detail.

### [Third laser processing method]

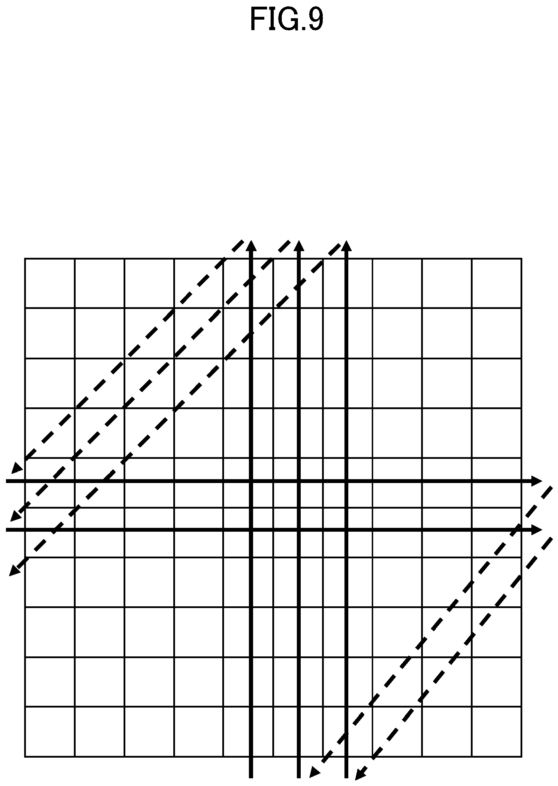

Figure 9 is a diagram illustrating the third processing method by the laser processing machine of the present embodiment. Arrows in Figure 9 indicate the movement directions of the laser processing head 30 (laser beam L).

In outline, as illustrated in Figures 4 and 9, in the third processing method, the control unit 53 of the control device 50 controls the moving mechanism 20 to: irradiate, with the laser beam L, first cells in the j-th column along the first forward direction, and then irradiate, with the laser beam L, first cells in the (i+1)-th row along the second forward direction; and irradiate, with the laser beam L, first cells in the (j+1)-th column along the first forward direction, and then irradiate, with the laser beam L, first cells in the i-th row along the second forward direction.

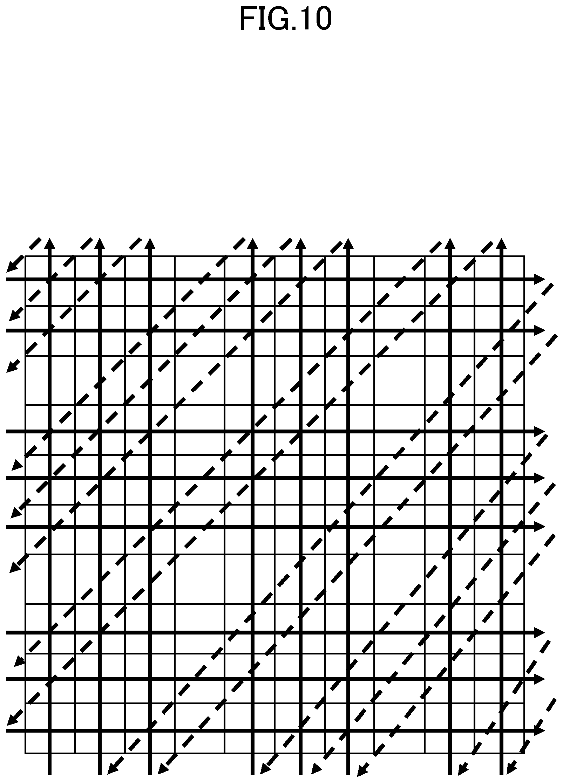

Figure 10 is a diagram illustrating the third processing method by the laser processing machine of the present embodiment. Arrows in Figure 10 indicate the movement directions of the laser processing head 30 (laser beam L).

First, as illustrated in Figures 4 and 10, the laser processing machine 1 irradiates the first cells with the laser beam L from the first direction. Specifically, the laser processing machine 1 uses the moving mechanism 20 to move the laser processing head 30 from cell C_{1,1} to cell C_{n,1} in the first column along the first forward direction, and irradiates each first cell in the first column with the laser beam L. Next, the laser processing machine 1 irradiates the first cells with the laser beam L from the second direction. Specifically, the laser processing machine 1 uses the moving mechanism 20 to move the laser processing head 30 from cell C_{n,1} to cell C_{n,m} in the n-th row along the second forward direction, and irradiates each first cell in the n-th row with the laser beam L.

Subsequently, the laser processing machine 1 uses the moving mechanism 20 to move the laser processing head 30 from cell C_{1,2} to cell C_{n,2} in the second column along the first forward direction, and irradiates each first cell in the second column with the laser beam L. Thereafter, the laser processing machine 1 uses the moving mechanism 20 to move the laser processing head 30 from cell C_{n-1,1} to cell C_{n-1,m} in the (n-1)-th row along the second forward direction, and irradiates each first cell in the (n-1)-th row with the laser beam L.

Similarly, each first cell in the j-th column is irradiated with the laser beam L along the first forward direction, and each first cell in the (i+1)-th row is irradiated with the laser beam L along the second forward direction. Also, each first cell in the (j+1)-th column is irradiated with the laser beam L along the first forward direction, and each first cell in the i-th row is irradiated with the laser beam L along the second forward direction. Further still, each first cell in the (j+1)-th column is irradiated with the laser beam L along the first forward direction and so on, and each first cell in all rows and columns is irradiated with the laser beam L, thereby engraving a matrix-type two-dimensional code in the workpiece W. According to the above steps, the third laser processing method by the laser processing machine 1 according to the present embodiment is performed.

Note that the third laser processing method is not limited to the example described above. For example, the laser processing machine 1 uses the moving mechanism 20 to move the laser processing head 30 from cell C_{1,1} to cell C_{n,1} in the first column along the first forward direction, and irradiates each first cell in the first column with the laser beam L. Next, the laser processing machine 1 uses the moving mechanism 20 to move the laser processing head 30 from cell C_{1,1} to cell C_{1,m} in the first row along the second forward direction, and irradiates each first cell in the first row with the laser beam L.

Subsequently, the laser processing machine 1 uses the moving mechanism 20 to move the laser processing head 30 from cell C_{1,2} to cell C_{n,2} in the second column along the first forward direction, and irradiates each first cell in the second column with the laser beam L. Thereafter, the laser processing machine 1 uses the moving mechanism 20 to move the laser processing head 30 from cell C_{2,1} to cell C_{2,m} in the second row along the second forward direction, and irradiates each first cell in the second row with the laser beam L.

The third laser processing method may also be the following example. For example, the laser processing machine 1 uses the moving mechanism 20 to move the laser processing head 30 from cell C_{1,1} to cell C_{n,1} in the first column along the first forward direction, and irradiates each first cell in the first column with the laser beam L. Next, the laser processing machine 1 uses the moving mechanism 20 to move the laser processing head 30 from cell C_{n,1} to cell C_{n,m} in the n-th row along the second forward direction, and irradiates each first cell in the n-th row with the laser beam L.

Subsequently, the laser processing machine 1 uses the moving mechanism 20 to move the laser processing head 30 from cell C_{1,m} to cell C_{n,m} in the m-th column along the first forward direction, and irradiates each first cell in the m-th column with the laser beam L. Thereafter, the laser processing machine 1 uses the moving mechanism 20 to move the laser processing head 30 from cell C_{n-1,1} to cell C_{n-1,m} in the (n-1)-th row along the second forward direction, and irradiates each first cell in the (n-1)-th row with the laser beam L.

### [Fourth laser processing method]

In outline, in the fourth processing method, the control unit 53 of the control device 50 controls the moving mechanism 20 to: irradiate, with the laser beam L, first cells in the j-th column along the first forward direction, and then irradiate, with the laser beam L, first cells in the (i+1)-th row along the second forward direction; and irradiate, with the laser beam L, first cells in the (j+1)-th column along the first reverse direction, and then irradiate, with the laser beam L, first cells in the i-th row along the second reverse direction.

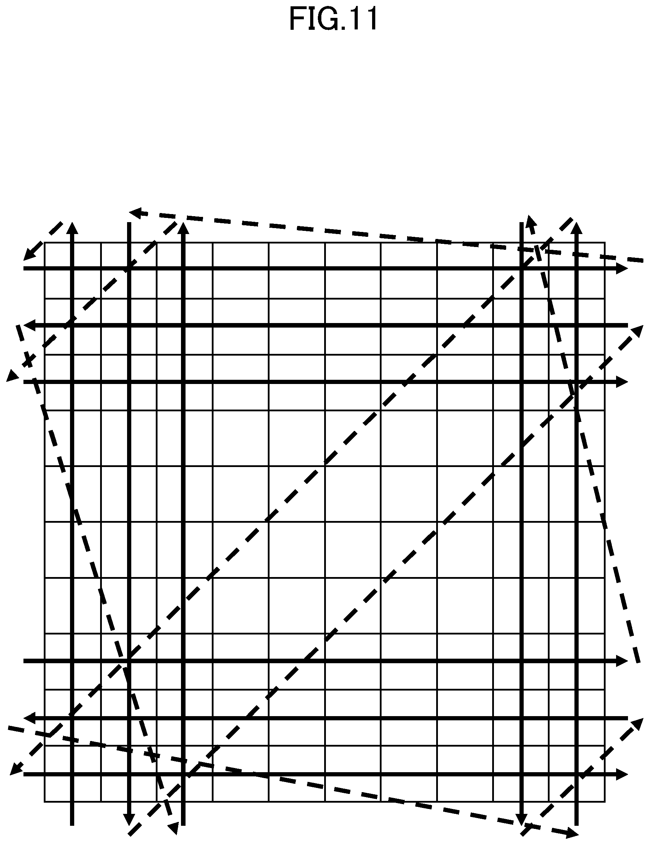

Figure 11 is a diagram illustrating the fourth processing method by the laser processing machine of the present embodiment. Arrows in Figure 11 indicate the movement directions of the laser processing head 30 (laser beam L).

First, as illustrated in Figures 4 and 11, the laser processing machine 1 irradiates the first cells with the laser beam L from the first direction. Specifically, the laser processing machine 1 uses the moving mechanism 20 to move the laser processing head 30 from cell C_{1,1} to cell C_{n,1} in the first column along the first forward direction, and irradiates each first cell in the first column with the laser beam L. Next, the laser processing machine 1 irradiates the first cells with the laser beam L from the second direction. Specifically, the laser processing machine 1 uses the moving mechanism 20 to move the laser processing head 30 from cell C_{n,1} to cell C_{n,m} in the n-th row along the second forward direction, and irradiates each first cell in the n-th row with the laser beam L.

Subsequently, the laser processing machine 1 uses the moving mechanism 20 to move the laser processing head 30 from cell C_{n,2} to cell C_{1,2} in the second column along the first reverse direction, and irradiates each first cell in the second column with the laser beam L. Thereafter, the laser processing machine 1 uses the moving mechanism 20 to move the laser processing head 30 from cell C_{n-1,m} to cell C_{n-1,1} in the (n-1)-th row along the second reverse direction, and irradiates each first cell in the (n-1)-th row with the laser beam L.

Similarly, each first cell in the (j-1)-th column is irradiated with the laser beam L along the first forward direction, and each first cell in the i-th row is irradiated with the laser beam L along the second forward direction. Also, each first cell in the j-th column is irradiated with the laser beam L along the first reverse direction, and each first cell in the (i-1)-th row is irradiated with the laser beam L along the second reverse direction. Further still, each first cell in the (j+1)-th column is irradiated with the laser beam L along the first forward direction and so on, and each first cell in all rows and columns is irradiated with the laser beam L, thereby engraving a matrix-type two-dimensional code in the workpiece W. According to the above steps, the fourth laser processing method by the laser processing machine 1 according to the present embodiment is performed.

Note that the fourth laser processing method is not limited to the example described above. For example, the laser processing machine 1 uses the moving mechanism 20 to move the laser processing head 30 from cell C_{1,1} to cell C_{n,1} in the first column along the first forward direction, and irradiates each first cell in the first column with the laser beam L. Next, the laser processing machine 1 uses the moving mechanism 20 to move the laser processing head 30 from cell C_{n,1} to cell C_{n,m} in the n-th row along the second forward direction, and irradiates each first cell in the n-th row with the laser beam L.

Subsequently, the laser processing machine 1 uses the moving mechanism 20 to move the laser processing head 30 from cell C_{n,m-1} to cell C_{1,m-1} in the (m-1)-th column along the first reverse direction, and irradiates each first cell in the (m-1)-th column with the laser beam L. Thereafter, the laser processing machine 1 uses the moving mechanism 20 to move the laser processing head 30 from cell C_{2,m} to cell C_{2,1} in the second row along the second reverse direction, and irradiates each first cell in the second row with the laser beam L.

The fourth laser processing method may also be the following example. For example, the laser processing machine 1 uses the moving mechanism 20 to move the laser processing head 30 from cell C_{1,1} to cell C_{n,1} in the first column along the first forward direction, and irradiates each first cell in the first column with the laser beam L. Next, the laser processing machine 1 uses the moving mechanism 20 to move the laser processing head 30 from cell C_{n-1,1} to cell C_{n-1,m} in the (n-1)-th row along the second forward direction, and irradiates each first cell in the (n-1)-th row with the laser beam L.

Subsequently, the laser processing machine 1 uses the moving mechanism 20 to move the laser processing head 30 from cell C_{n,m-1} to cell C_{1,m-1} in the (m-1)-th column along the first reverse direction, and irradiates each first cell in the (m-1)-th column with the laser beam L. Thereafter, the laser processing machine 1 uses the moving mechanism 20 to move the laser processing head 30 from cell C_{1,m} to cell C_{1,1} in the first row along the second reverse direction, and irradiates each first cell in the first row with the laser beam L.

### [Advantages of laser processing machine according to present embodiment]

As described above, the laser processing machine 1 according to the present embodiment is a laser processing machine that engraves, in a surface of a workpiece W, a matrix-type two-dimensional code in which a first cell as a unit irradiation area and a second cell as a unit non-irradiation area are arranged in a desired array pattern in a first direction and a second direction orthogonal to the first direction, the laser processing machine being provided with a laser processing head 30 that irradiates the workpiece W with a laser beam L, a moving mechanism 20 that moves the laser beam L radiated from the laser processing head 30 in the first direction and the second direction, and a control unit 53 that controls the moving mechanism 20, wherein each first cell is irradiated with the laser beam L along both the first direction and the second direction.

Additionally, by being provided with such a configuration, the laser processing machine 1 according to the present embodiment has the advantage that the first cell is irradiated with the laser beam L along both the first direction and the second direction, whereby a two-dimensional code with high reading accuracy can be engraved in a short time.

Also, in the laser processing machine 1 according to the present embodiment, the control unit 53 controls the moving mechanism 20 such that the first cell is irradiated with the laser beam L along the first direction and then irradiated with the laser beam L again along the second direction. Providing such a configuration has the advantage of a short processing time, because the first cells arranged in either the same row or column are each irradiated with the laser beam L consecutively along the first direction, and then the first cells arranged in the other of either the same row or column are each irradiated with the laser beam L consecutively along the second direction.

Further, in the laser processing machine 1 according to the present embodiment, the matrix-type two-dimensional code has an array pattern of n rows and m columns (where n and m are integers equal to or greater than 2), and the control unit 53 controls the moving mechanism 20 to: irradiate, with the laser beam L, first cells in a j-th column (where j is an integer equal to or greater than 1 and less than m) along a first forward direction, and then irradiate, with the laser beam L, first cells in a column other than the j-th column along a first reverse direction; and irradiate, with the laser beam L, first cells in an i-th row (where i is an integer equal to or greater than 1 and less than n) along a second reverse direction, and then irradiate, with the laser beam L, first cells in a row other than the i-th row along a second forward direction. Providing such a configuration has the advantage that the laser processing head 30 moves by turning back over rows or columns, whereby the processing time can be shortened further.

Further still, in the laser processing machine 1 according to the present embodiment, the matrix-type two-dimensional code has an array pattern of n rows and m columns (where n and m are integers equal to or greater than 2), and the control unit 53 controls the moving mechanism 20 to: irradiate, with the laser beam L, first cells in a j-th column (where j is an integer equal to or greater than 1 and less than m) along a first forward direction, and then irradiate, with the laser beam L, first cells in a column other than the j-th column along the first forward direction; and irradiate, with the laser beam L, first cells in an i-th row (where i is an integer equal to or greater than 1 and less than n) along a second reverse direction, and then irradiate, with the laser beam L, first cells in a row other than the i-th row along the second reverse direction. Providing such a configuration has the advantage that all first cells are irradiated with the laser beam L from the same directions, whereby uneven brightness of reflected light in each of the first cells can be suppressed.

Also, in the laser processing machine 1 according to the present embodiment, the matrix-type two-dimensional code has an array pattern of n rows and m columns (where n and m are integers equal to or greater than 2), and the control unit 53 controls the moving mechanism 20 to: irradiate, with the laser beam L, first cells in a j-th column (where j is an integer equal to or greater than 1 and less than m) along a first direction, and then irradiate, with the laser beam L, first cells in an i-th row (where i is an integer equal to or greater than 1 and less than n) along a second direction; and irradiate, with the laser beam L, first cells in a column other than the j-th column along the first direction, and then irradiate, with the laser beam L, first cells in a row other than the i-th row along the second direction. Providing such a configuration has the advantage that alternating processing is performed from the first direction and the second direction, whereby a distance moved by the laser processing head 30 when moving to another row or column is shorter and the processing time can be reduced.

Further, in the laser processing machine 1 according to the present embodiment, the matrix-type two-dimensional code has an array pattern of n rows and m columns (where n and m are integers equal to or greater than 2), and the control unit 53 controls the moving mechanism 20 to: irradiate, with the laser beam L, first cells in a j-th column (where j is an integer equal to or greater than 1 and less than m) along a first forward direction, and then irradiate, with the laser beam L, first cells in an (i+1)-th row (where i is an integer equal to or greater than 1 and less than n) along a second forward direction; and irradiate, with the laser beam L, first cells in the (j+1)-th column along the first forward direction, and then irradiate, with the laser beam L, first cells in the i-th row along the second forward direction. Providing such a configuration has the advantage that a total distance moved by the laser processing head 30 is shortened and all first cells are irradiated with the laser beam L from the same directions, whereby uneven brightness of reflected light in each of the first cells can be suppressed while shortening the processing time.

Also, the laser processing machine 1 according to the present embodiment is provided with a beam vibrating mechanism (galvano scanner unit 32), wherein the beam vibrating mechanism (galvano scanner unit 32) is configured to vibrate the laser beam L, and the control unit 53 uses the moving mechanism 20 to move the laser beam L along one of either the first direction or the second direction while using the beam vibrating mechanism (galvano scanner unit 32) to vibrate the laser beam L along the other of either the first direction or the second direction. Providing such a configuration has the advantage that a large area can be processed with a single laser irradiation.

Further, in the laser processing machine 1 according to the present embodiment, the beam vibrating mechanism (galvano scanner unit 32) vibrates the laser beam L in a direction orthogonal to the movement direction of the laser beam L. Providing such a configuration has the advantage that processing can be performed to fill a first cell.

Further still, in the laser processing machine 1 according to the present embodiment, the beam vibrating mechanism (galvano scanner unit 32) vibrates the laser beam L in the movement direction of the laser beam L and the direction orthogonal to the movement direction of the laser beam L. Providing such a configuration has the advantage that the periphery of the movement direction of the laser beam L can be evenly processed, and uneven brightness of reflected light in the first cells can be suppressed.

### [Modifications]

The above describes the preferred embodiment of the present invention, but the technical scope of the present invention is not limited to the scope indicated in the embodiment described above. Various changes or alterations can be applied to the embodiment described above.

For example, in the embodiment described above, the control unit 53 is described as controlling the moving mechanism 20 such that the first cells arranged in either the same row or column are each irradiated with the laser beam L consecutively along the first direction, and then the first cells arranged in the other of either the same row or column are each irradiated with the laser beam L consecutively along the second direction, but is not limited thereto. The control unit 53 may also not control the moving mechanism 20 for every first cell such that the first cell is irradiated with the laser beam L along the first direction and then irradiated with the laser beam L again along the second direction.

In the embodiment described above, the control unit 53 is described as controlling the moving mechanism 20 to irradiate first cells with the laser beam L according to the first through fourth laser processing methods, but is not limited thereto, and may also control the moving mechanism 20 to irradiate first cells with the laser beam L according to laser processing methods other than the first through fourth laser processing methods. Laser processing methods other than the first through fourth laser processing methods include following first through fourth modifications, for example.

### [First modification of laser processing method]

In outline, the control unit 53 of the control device 50 controls the moving mechanism 20 to: irradiate, with the laser beam L, first cells in the j-th column along the first forward direction, and then irradiate, with the laser beam L, first cells in a column other than the j-th column along the first reverse direction; and irradiate, with the laser beam L, first cells in the i-th row along the second forward direction, and then irradiate, with the laser beam L, first cells in a row other than the i-th row along the second reverse direction.

First, as illustrated in Figures 4 and 5, the laser processing machine 1 irradiates the first cells with the laser beam L from the first direction. Specifically, the laser processing machine 1 uses the moving mechanism 20 to move the laser processing head 30 from cell C_{1,1} to cell C_{n,1} in the first column along the first forward direction, and irradiates each first cell in the first column with the laser beam L. Next, the laser processing machine 1 uses the moving mechanism 20 to move the laser processing head 30 from cell C_{n,2} to cell C_{1,2} in the second column along the first reverse direction, and irradiates each first cell in the second column with the laser beam L. The above is repeated similarly to the m-th column.

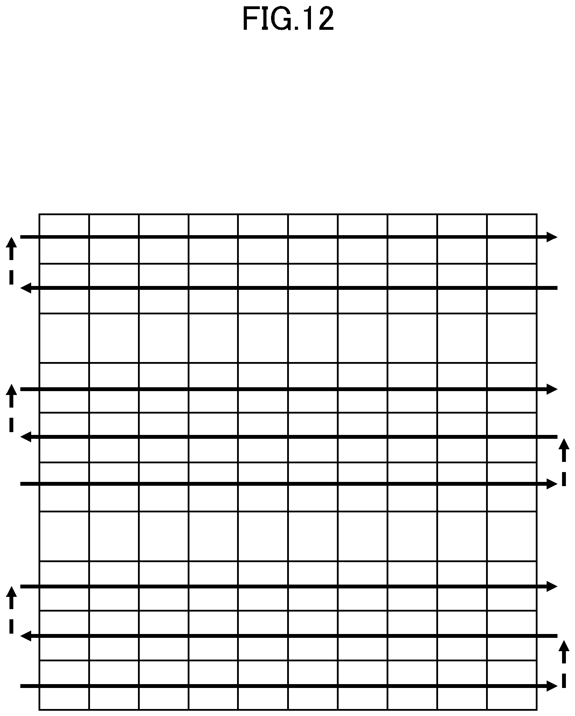

Figure 12 is a diagram illustrating the first modification of the laser processing method by the laser processing machine of the present embodiment. Arrows in Figure 12 indicate the movement directions of the laser processing head 30 (laser beam L).

Thereafter, as illustrated in Figures 4 and 12, the laser processing machine 1 irradiates the first cells with the laser beam L from the second direction. Specifically, the laser processing machine 1 uses the moving mechanism 20 to move the laser processing head 30 from cell C_{1,1} to cell C_{1,m} in the first row along the second forward direction, and irradiates each first cell in the first row with the laser beam L. Next, the laser processing machine 1 uses the moving mechanism 20 to move the laser processing head 30 from cell C_{2,m} to cell C_{2,1} in the second row along the second reverse direction, and irradiates each first cell in the second row with the laser beam L. A matrix-type two-dimensional code is engraved in the workpiece W by similarly repeating the above to the n-th row. According to the above steps, the first modification of the laser processing method by the laser processing machine 1 according to the present embodiment is performed.

### [Second modification of laser processing method]

In outline, the control unit 53 of the control device 50 controls the moving mechanism 20 to: irradiate, with the laser beam L, first cells in the j-th column along the first forward direction, and then irradiate, with the laser beam L, first cells in a column other than the j-th column along the first reverse direction; and irradiate, with the laser beam L, first cells in the i-th row along the second forward direction in order starting from the row containing the cell that the laser processing head 30 (laser beam L) last passed, and then irradiate, with the laser beam L, first cells in a row other than the i-th row along the second reverse direction.

First, in a manner similar to the first modification, the laser processing machine 1 irradiates the first cells with the laser beam L from the first direction. Specifically, the laser processing machine 1 uses the moving mechanism 20 to move the laser processing head 30 from cell C_{1,1} to cell C_{n,1} in the first column along the first forward direction, and irradiates each first cell in the first column with the laser beam L. Next, the laser processing machine 1 uses the moving mechanism 20 to move the laser processing head 30 from cell C_{n,2} to cell C_{1,2} in the second column along the first reverse direction, and irradiates each first cell in the second column with the laser beam L. The above is repeated similarly to the m-th column.

Thereafter, in a case where the matrix-type two-dimensional code has an odd number of columns, the laser processing machine 1 uses the moving mechanism 20 to move the laser processing head 30 from cell C_{n,1} to cell C_{n,m} in the n-th row along the second forward direction, and irradiates each first cell in the n-th row with the laser beam L. Next, the laser processing machine 1 uses the moving mechanism 20 to move the laser processing head 30 from cell C_{n-1,m} to cell C_{n-1,1} in the (n-1)-th row along the second reverse direction, and irradiates each first cell in the (n-1)-th row with the laser beam L. A matrix-type two-dimensional code is engraved in the workpiece W by similarly repeating the above to the first row.

Also, in a case where the matrix-type two-dimensional code has an even number of columns, the laser processing machine 1 uses the moving mechanism 20 to move the laser processing head 30 from cell C_{1,1} to cell C_{1,m} in the first row along the second forward direction, and irradiates each first cell in the first row with the laser beam L. Next, the laser processing machine 1 uses the moving mechanism 20 to move the laser processing head 30 from cell C_{2,m} to cell C_{2,1} in the second row along the second reverse direction, and irradiates each first cell in the second row with the laser beam L. A matrix-type two-dimensional code is engraved in the workpiece W by similarly repeating the above to the n-th row. According to the above steps, the second modification of the laser processing method by the laser processing machine 1 according to the present embodiment is performed.

### [Third modification of laser processing method]

In outline, the control unit 53 of the control device 50 controls the moving mechanism 20 to: irradiate, with the laser beam L, first cells in the j-th column along the first forward direction, and then irradiate, with the laser beam L, first cells in a column other than the j-th column along the first forward direction; and irradiate, with the laser beam L, first cells in the i-th row along the second forward direction, and then irradiate, with the laser beam L, first cells in a row other than the i-th row along the second forward direction.

First, as illustrated in Figures 4 and 7, the laser processing machine 1 irradiates the first cells with the laser beam L from the first direction. Specifically, the laser processing machine 1 uses the moving mechanism 20 to move the laser processing head 30 from cell C_{1,1} to cell C_{n,1} in the first column along the first forward direction, and irradiates each first cell in the first column with the laser beam L. Next, the laser processing machine 1 uses the moving mechanism 20 to move the laser processing head 30 from cell C_{1,2} to cell C_{n,2} in the second column along the first forward direction, and irradiates each first cell in the second column with the laser beam L. The above is repeated similarly to the m-th column.

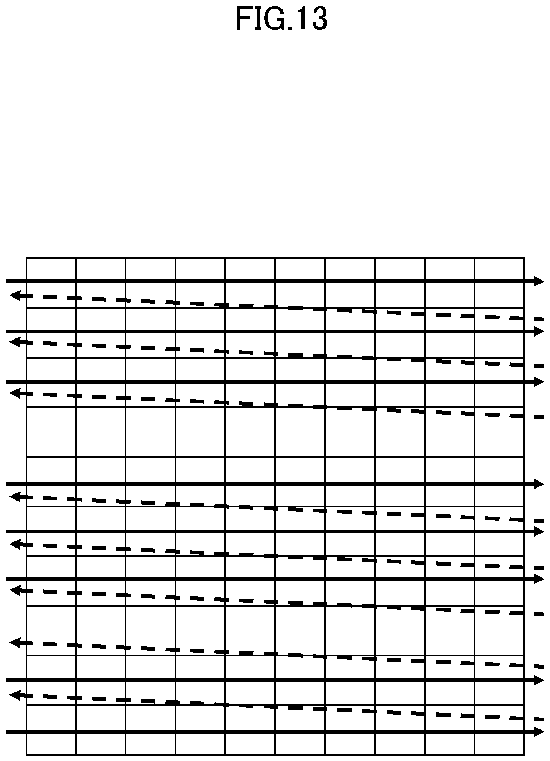

Figure 13 is a diagram illustrating the third modification of the laser processing method by the laser processing machine of the present embodiment. Arrows in Figure 13 indicate the movement directions of the laser processing head 30 (laser beam L).

Thereafter, as illustrated in Figures 4 and 13, the laser processing machine 1 irradiates the first cells with the laser beam L from the second direction. Specifically, the laser processing machine 1 uses the moving mechanism 20 to move the laser processing head 30 from cell C_{1,1} to cell C_{1,m} in the first row along the second forward direction, and irradiates each first cell in the first row with the laser beam L. Next, the laser processing machine 1 uses the moving mechanism 20 to move the laser processing head 30 from cell C_{2,1} to cell C_{2,m} in the second row along the second forward direction, and irradiates each first cell in the second row with the laser beam L. A matrix-type two-dimensional code is engraved in the workpiece W by similarly repeating the above to the n-th row. According to the above steps, the third modification of the laser processing method by the laser processing machine 1 according to the present embodiment is performed.

### [Fourth modification of laser processing method]

First, in a manner similar to the third modification, the laser processing machine 1 irradiates the first cells with the laser beam L from the first direction. Specifically, the laser processing machine 1 uses the moving mechanism 20 to move the laser processing head 30 from cell C_{1,1} to cell C_{n,1} in the first column along the first forward direction, and irradiates each first cell in the first column with the laser beam L. Next, the laser processing machine 1 uses the moving mechanism 20 to move the laser processing head 30 from cell C_{1,2} to cell C_{n,2} in the second column along the first forward direction, and irradiates each first cell in the second column with the laser beam L. The above is repeated similarly to the m-th column.

Thereafter, the laser processing machine 1 irradiates the first cells with the laser beam L from the second direction. Specifically, the laser processing machine 1 uses the moving mechanism 20 to move the laser processing head 30 from cell C_{n,1} to cell C_{n,m} in the n-th row along the second forward direction, and irradiates each first cell in the first row with the laser beam L. Next, the laser processing machine 1 uses the moving mechanism 20 to move the laser processing head 30 from cell C_{n-1,1} to cell C_{n-1,m} in the (n-1)-th row along the second forward direction, and irradiates each first cell in the (n-1)-th row with the laser beam L. A matrix-type two-dimensional code is engraved in the workpiece W by similarly repeating the above to the first row. According to the above steps, the fourth modification of the laser processing method by the laser processing machine 1 according to the present embodiment is performed.

In the embodiment described above, the laser processing machine 1 is described as being provided with a beam vibrating mechanism (galvano scanner unit 32), wherein the beam vibrating mechanism (galvano scanner unit 32) is configured to vibrate the laser beam L, and the control unit 53 uses the moving mechanism 20 to move the laser beam L along one of either the first direction or the second direction while using the beam vibrating mechanism (galvano scanner unit 32) to vibrate the laser beam L along the other of either the first direction or the second direction, but the laser processing machine 1 is not limited thereto.

In the embodiment described above, the beam vibrating mechanism (galvano scanner unit 32) is described as vibrating the laser beam L in the direction orthogonal to the movement direction of the laser beam L, or in the movement direction of the laser beam L and the direction orthogonal to the movement direction of the laser beam L, but is not limited thereto.

In the embodiment described above, the moving mechanism 20 is described as being configured to drive at least one of the laser processing head 30 and the processing table 21 so that the laser processing head 30 and the processing table 21 move relative to one another, but is not limited thereto. For example, the laser processing head 30 and the processing table 21 may both be fixed, and the galvano scanner unit 32 may function as the moving mechanism 20 by moving the laser beam L radiated from the laser processing head 30 in the first direction and the second direction. In the case where the moving mechanism 20 is configured to drive at least one of the laser processing head 30 and the processing table 21 so that the laser processing head 30 and the processing table 21 move relative to one another, a matrix-type two-dimensional code that is larger than the movable range of the galvano scanner unit 32 can be engraved.

### Reference Signs List

1: laser processing machine
10: laser oscillator
12: process fiber
20: moving mechanism
21: processing table
22: X-axis carriage
23: Y-axis carriage
30: laser processing head
30a: housing
30b: nozzle
31: collimating lens
32: galvano scanner unit (beam vibrating mechanism)
33: first scanning section
33a: first scanning mirror
33b: first drive section
34: second scanning section
34a: second scanning mirror
34b: second drive section
35: bend mirror
36: condensing lens
50: control device
51: input unit
52: display unit
53: control unit
53a: movement control unit
53b: laser control unit
54: storage unit
L: laser beam
W: workpiece

## Claims

1. A laser processing machine (1) configured to engrave, in a surface of a workpiece (W), a matrix-type two-dimensional code in which a first cell as a unit irradiation area and a second cell as a unit non-irradiation area are arranged in a desired array pattern in a first direction and a second direction orthogonal to the first direction, the laser processing machine (1) comprising:
a laser processing head (30) configured to irradiate the workpiece (W) with a laser beam (L);
a moving mechanism (20) configured to move the laser beam (L) radiated from the laser processing head (30) in the first direction; and
a control unit (53),
**characterized by**
a beam vibrating mechanism (32) configured to vibrate the laser beam (L), wherein
the moving mechanism (20) is further configured to move the laser beam (L) radiated from the laser processing head (30) in the second direction; and
the control unit (53) is configured to control the moving mechanism (20) to move the laser beam (L) along one of either the first direction or the second direction while using the beam vibrating mechanism (32) to vibrate the laser beam (L) along the other of either the first direction or the second direction, and
the laser processing machine (1) is configured to irradiate each first cell with the laser beam (L) along both the first direction and the second direction.

2. The laser processing machine (1) according to claim 1, wherein
the control unit (53) is configured to control the moving mechanism (20) such that the first cell is irradiated with the laser beam (L) along the first direction and then irradiated with the laser beam (L) again along the second direction.

3. The laser processing machine (1) according to claim 1 or 2, wherein
the matrix-type two-dimensional code has an array pattern of n rows and m columns (where n and m are integers equal to or greater than 2), and
the control unit (53) is configured to control the moving mechanism (20) to: irradiate, with the laser beam (L), first cells in a j-th column (where j is an integer equal to or greater than 1 and less than m) along a first forward direction, and then irradiate, with the laser beam (L), first cells in a column other than the j-th column along a first reverse direction; and irradiate, with the laser beam (L), first cells in an i-th row (where i is an integer equal to or greater than 1 and less than n) along a second reverse direction, and then irradiate, with the laser beam (L), first cells in a row other than the i-th row along a second forward direction.

4. The laser processing machine (1) according to claim 1 or 2, wherein
the matrix-type two-dimensional code has an array pattern of n rows and m columns (where n and m are integers equal to or greater than 2), and
the control unit (53) is configured to control the moving mechanism (20) to: irradiate, with the laser beam (L), first cells in a j-th column (where j is an integer equal to or greater than 1 and less than m) along a first forward direction, and then irradiate, with the laser beam (L), first cells in a column other than the j-th column along the first forward direction; and irradiate, with the laser beam (L), first cells in an i-th row (where i is an integer equal to or greater than 1 and less than n) along a second reverse direction, and then irradiate, with the laser beam (L), first cells in a row other than the i-th row along the second reverse direction.

5. The laser processing machine (1) according to claim 1 or 2, wherein
the matrix-type two-dimensional code has an array pattern of n rows and m columns (where n and m are integers equal to or greater than 2), and
the control unit (53) is configured to control the moving mechanism (20) to: irradiate, with the laser beam (L), first cells in a j-th column (where j is an integer equal to or greater than 1 and less than m) along the first direction, and then irradiate, with the laser beam (L), first cells in an i-th row (where i is an integer equal to or greater than 1 and less than n) along the second direction; and irradiate, with the laser beam (L), first cells in a column other than the j-th column along the first direction, and then irradiate, with the laser beam (L), first cells in a row other than the i-th row along the second direction.

6. The laser processing machine (1) according to claim 1 or 2, wherein
the matrix-type two-dimensional code has an array pattern of n rows and m columns (where n and m are integers equal to or greater than 2), and
the control unit (53) is configured to control the moving mechanism (20) to: irradiate, with the laser beam (L), first cells in a j-th column (where j is an integer equal to or greater than 1 and less than m) along a first forward direction, and then irradiate, with the laser beam (L), first cells in an (i+1)-th row (where i is an integer equal to or greater than 1 and less than n) along a second forward direction; and irradiate, with the laser beam (L), first cells in the (j+1)-th column along the first forward direction, and then irradiate, with the laser beam (L), first cells in the i-th row along the second forward direction.

7. The laser processing machine (1) according to claim 1 or 2, wherein
the matrix-type two-dimensional code has an array pattern of n rows and m columns (where n and m are integers equal to or greater than 2), and
the control unit (53) is configured to control the moving mechanism (20) to: irradiate, with the laser beam (L), first cells in a j-th column (where j is an integer equal to or greater than 1 and less than m) along a first forward direction, and then irradiate, with the laser beam (L), first cells in an (i+1)-th row (where i is an integer equal to or greater than 1 and less than n) along a second forward direction; and irradiate, with the laser beam (L), first cells in the (j+1)-th column along a first reverse direction, and then irradiate, with the laser beam (L), first cells in the i-th row along a second reverse direction.

8. The laser processing machine (1) according to any one of claims 1 to 7, wherein
the beam vibrating mechanism (32) is configured to vibrate the laser beam (L) in a direction orthogonal to a movement direction of the laser beam (L).

9. The laser processing machine (1) according to any one of claims 1 to 7, wherein
the beam vibrating mechanism (32) is configured to vibrate the laser beam (L) in a movement direction of the laser beam (L) and a direction orthogonal to the movement direction of the laser beam (L).

10. A laser processing method for engraving, in a surface of a workpiece (W), a matrix-type two-dimensional code in which a first cell as a unit irradiation area and a second cell as a unit non-irradiation area are arranged in a desired array pattern in a first direction and a second direction orthogonal to the first direction, the laser processing method **characterized by** comprising:
moving a laser beam (L) along one of either the first direction or the second direction while vibrating the laser beam (L) along the other of either the first direction or the second direction and irradiating the each first cell with the laser beam (L) along both the first direction and the second direction.

11. The laser processing method according to claim 10, wherein
the first cell is irradiated with the laser beam (L) along the first direction and then irradiated with the laser beam (L) again along the second direction.

12. A laser processing program for engraving, in a surface of a workpiece (W), a matrix-type two-dimensional code in which a first cell as a unit irradiation area and a second cell as a unit non-irradiation area are arranged in a desired array pattern in a first direction and a second direction orthogonal to the first direction, the laser processing program **characterized by**:
causing the control unit (53) of the laser processing machine (1) according to one of claims 1 to 9 to perform an engraving process by moving a laser beam (L) along one of either the first direction or the second direction while vibrating the laser beam (L) along the other of either the first direction or the second direction and irradiating the each first cell with the laser beam (L) along both the first direction and the second direction.

13. The laser processing program according to claim 12, the laser processing program:
causing a control unit (53) to perform a two-time processing process for irradiating the first cell with the laser beam (L) along the first direction and then irradiating the first cell with the laser beam (L) again along the second direction.

## Patentansprüche

1. Laserbearbeitungsmaschine (1), die dafür konfiguriert ist, in eine Oberfläche eines Werkstücks (W) einen matrixartigen zweidimensionalen Code einzugravieren, in dem eine erste Zelle als eine Bestrahlungs-Einheitsfläche und eine zweite Zelle als eine Nichtbestrahlungs-Einheitsfläche in einem gewünschten Array-Muster in einer ersten Richtung und einer zweiten Richtung rechtwinklig zu der ersten Richtung angeordnet sind, wobei die Laserbearbeitungsmaschine (1) umfasst:
einen Laserbearbeitungskopf (30), der dafür konfiguriert ist, das Werkstück (W) mit einem Laserstrahl (L) zu bestrahlen;
einen Bewegungsmechanismus (20), der dafür konfiguriert ist, den von dem Laserbearbeitungskopf (30) ausgestrahlten Laserstrahl (L) in der ersten Richtung zu bewegen; sowie
eine Steuereinheit (53),
**gekennzeichnet durch**
einen Strahl-Vibrationsmechanismus (32), der dafür konfiguriert ist, den Laserstrahl (L) in Vibration zu versetzen, wobei
der Bewegungsmechanismus (20) des Weiteren dafür konfiguriert ist, den von dem Laserbearbeitungskopf (30) ausgestrahlten Laserstrahl (L) in der zweiten Richtung zu bewegen; und
die Steuereinheit (53) dafür konfiguriert ist, den Bewegungsmechanismus (20) so zu steuern, dass er den Laserstrahl (L) entweder in der ersten Richtung, oder der zweiten Richtung bewegt, während der Strahl-Vibrationsmechanismus (32) verwendet wird, um den Laserstrahl (L) in der jeweils anderen Richtung, d.h. entweder der ersten Richtung oder der zweiten Richtung, in Vibration zu versetzen, und
die Laserbearbeitungsmaschine (1) dafür konfiguriert ist, jede erste Zelle mit dem Laserstrahl (L) sowohl in der ersten Richtung als auch der zweiten Richtung zu bestrahlen.

2. Laserbearbeitungsmaschine (1) nach Anspruch 1, wobei
die Steuereinheit (53) dafür konfiguriert ist, den Bewegungsmechanismus (20) so zu steuern, dass die erste Zelle mit dem Laserstrahl (L) in der ersten Richtung bestrahlt wird und dann mit dem Laserstrahl (L) wieder in der zweiten Richtung bestrahlt wird.

3. Laserbearbeitungsmaschine (1) nach Anspruch 1 oder 2, wobei
der matrixartige zweidimensionale Code ein Array-Muster aus n Zeilen und m Spalten aufweist (wobei n und m ganze Zahlen gleich oder größer als 2 sind), und
die Steuereinheit (53) dafür konfiguriert ist, den Bewegungsmechanismus (20) so zu steuern, dass: erste Zellen in einer j-ten Spalte (wobei j eine ganze Zahl gleich oder größer als 1 und kleiner als m ist) mit dem Laserstrahl (L) in einer ersten Vorwärtsrichtung bestrahlt werden und dann erste Zellen in einer anderen Spalte als der j-ten Spalte mit dem Laserstrahl (L) in einer ersten Rückwärtsrichtung bestrahlt werden; und erste Zellen in einer i-ten Zeile (wobei i eine ganze Zahl gleich oder größer als 1 und kleiner als n ist) mit dem Laserstrahl (L) in einer zweiten Rückwärtsrichtung bestrahlt werden und dann erste Zellen in einer anderen Zeile als der i-ten Zeile mit dem Laserstrahl (L) in einer zweiten Vorwärtsrichtung bestrahlt werden.

4. Laserbearbeitungsmaschine (1) nach Anspruch 1 oder 2, wobei
der matrixartige zweidimensionale Code ein Array-Muster aus n Zeilen und m Spalten aufweist (wobei n und m ganze Zahlen gleich oder größer als 2 sind), und
die Steuereinheit (53) dafür konfiguriert ist, den Bewegungsmechanismus (20) so zu steuern, dass: erste Zellen in einer j-ten Spalte (wobei j eine ganze Zahl gleich oder größer als 1 und kleiner als m ist) mit dem Laserstrahl (L) in einer ersten Vorwärtsrichtung bestrahlt werden und dann erste Zellen in einer anderen Spalte als der j-ten Spalte mit dem Laserstrahl (L) in der ersten Rückwärtsrichtung bestrahlt werden; und erste Zellen in einer i-ten Zeile (wobei i eine ganze Zahl gleich oder größer als 1 und kleiner als n ist) mit dem Laserstrahl (L) in einer zweiten Rückwärtsrichtung bestrahlt werden und dann erste Zellen in einer anderen Zeile als der i-ten Zeile mit dem Laserstrahl (L) in der zweiten Rückwärtsrichtung bestrahlt werden.

5. Laserbearbeitungsmaschine (1) nach Anspruch 1 oder 2, wobei
der matrixartige zweidimensionale Code ein Array-Muster aus n Zeilen und m Spalten aufweist (wobei n und m ganze Zahlen gleich oder größer als 2 sind), und
die Steuereinheit (53) dafür konfiguriert ist, den Bewegungsmechanismus (20) so zu steuern, dass: erste Zellen in einer j-ten Spalte (wobei j eine ganze Zahl gleich oder größer als 1 und kleiner als m ist) mit dem Laserstrahl (L) in der ersten Richtung bestrahlt werden und dann erste Zellen in einer i-ten Zeile (wobei i eine ganze Zahl gleich oder größer als 1 und kleiner als n ist) mit dem Laserstrahl (L) in der zweiten Richtung bestrahlt werden;
und dann erste Zellen in einer anderen Spalte als der j-ten Spalte mit dem Laserstrahl (L) in der ersten Richtung bestrahlt werden und dann erste Zellen in einer anderen Zeile als der i-ten Zeile mit dem Laserstrahl (L) in der zweiten Richtung bestrahlt werden.

6. Laserbearbeitungsmaschine (1) nach Anspruch 1 oder 2, wobei
der matrixartige zweidimensionale Code ein Array-Muster aus n Zeilen und m Spalten aufweist (wobei n und m ganze Zahlen gleich oder größer als 2 sind), und
die Steuereinheit (53) dafür konfiguriert ist, den Bewegungsmechanismus (20) so zu steuern, dass: erste Zellen in einer j-ten Spalte (wobei j eine ganze Zahl gleich oder größer als 1 und kleiner als m ist) mit dem Laserstrahl (L) in einer ersten Vorwärtsrichtung bestrahlt werden und dann erste Zellen in einer (i+1)-ten Spalte (wobei i eine ganze Zahl gleich oder größer als 1 und kleiner als n ist) mit dem Laserstrahl (L) in einer zweiten Vorwärtsrichtung bestrahlt werden; und erste Zellen in der (j+1)-ten Zeile mit dem Laserstrahl (L) in der ersten Vorwärtsrichtung bestrahlt werden und dann erste Zellen in der i-ten Zeile mit dem Laserstrahl (L) in der zweiten Vorwärtsrichtung bestrahlt werden.

7. Laserbearbeitungsmaschine (1) nach Anspruch 1 oder 2, wobei
der matrixartige zweidimensionale Code ein Array-Muster aus n Zeilen und m Spalten aufweist (wobei n und m ganze Zahlen gleich oder größer als 2 sind), und
die Steuereinheit (53) dafür konfiguriert ist, den Bewegungsmechanismus (20) so zu steuern, dass: erste Zellen in einer j-ten Spalte (wobei j eine ganze Zahl gleich oder größer als 1 und kleiner als m ist) mit dem Laserstrahl (L) in einer ersten Vorwärtsrichtung bestrahlt werden und dann erste Zellen in einer (i+1)-ten Zeile (wobei i eine ganze Zahl gleich oder größer als 1 und kleiner als n ist) mit dem Laserstrahl (L) in einer zweiten Vorwärtsrichtung bestrahlt werden; und erste Zellen in der (j+1)-ten Spalte mit dem Laserstrahl (L) in einer ersten Rückwärtsrichtung bestrahlt werden und dann erste Zellen in der i-ten Zeile mit dem Laserstrahl (L) in einer zweiten Rückwärtsrichtung bestrahlt werden.

8. Laserbearbeitungsmaschine (1) nach einem der Ansprüche 1 bis 7, wobei
der Strahl-Vibrationsmechanismus (32) dafür konfiguriert ist, den Laserstrahl (L) in einer Richtung rechtwinklig zu einer Bewegungsrichtung des Laserstrahls (L) in Vibration zu versetzen.

9. Laserbearbeitungsmaschine (1) nach einem der Ansprüche 1 bis 7, wobei
der Strahl-Vibrationsmechanismus (32) dafür konfiguriert ist, den Laserstrahl (L) in einer Bewegungsrichtung des Laserstrahls (L) sowie in einer Richtung rechtwinklig zu der Bewegungsrichtung des Laserstrahls (L) in Vibration zu versetzen.

10. Laserbearbeitungsverfahren zum Eingravieren eines matrixartigen zweidimensionalen Codes, in dem eine erste Zelle als eine Bestrahlungs-Einheitsfläche und eine zweite Zelle als eine Nichtbestrahlungs-Einheitsfläche in einem gewünschten Array-Muster in einer ersten Richtung und einer zweiten Richtung rechtwinklig zu der ersten Richtung angeordnet sind, in eine Oberfläche eines Werkstücks (W), wobei das Laserbearbeitungsverfahren **dadurch gekennzeichnet ist, dass** es umfasst:
Bewegen eines Laserstrahls (L) entweder in der ersten Richtung oder der zweiten Richtung, während der Laserstrahl (L) in der anderen von der ersten Richtung und der zweiten Richtung in Vibration versetzt wird, und Bestrahlen jeder ersten Zelle mit dem Laserstrahl (L) sowohl in der ersten Richtung als auch der zweiten Richtung.

11. Laserbearbeitungsverfahren nach Anspruch 10, wobei
die erste Zelle mit dem Laserstrahl (L) in der ersten Richtung bestrahlt wird und dann mit dem Laserstrahl (L) wieder in der zweiten Richtung bestrahlt wird.

12. Laserbearbeitungsprogramm zum Eingravieren eines matrixartigen zweidimensionalen Codes, in dem eine erste Zelle als eine Bestrahlungs-Einheitsfläche und eine zweite Zelle als eine Nichtbestrahlungs-Einheitsfläche in einem gewünschten Array-Muster in einer ersten Richtung und einer zweiten Richtung rechtwinklig zu der ersten Richtung angeordnet sind, in eine Oberfläche eines Werkstücks (W), wobei das Laserbearbeitungsverfahren **gekennzeichnet ist durch**:
Veranlassen, dass die Steuereinheit (53) der Laserbearbeitungsmaschine (1) nach einem der Ansprüche 1 bis 9 einen Gravierprozess durchführt, indem sie einen Laserstrahl (L) entweder in der ersten Richtung oder der zweiten Richtung bewegt, während der Laserstrahl (L) in der anderen von der ersten Richtung und der zweiten Richtung in Vibration versetzt wird, und jede erste Zelle mit dem Laserstrahl (L) sowohl in der ersten Richtung als auch der zweiten Richtung bestrahlt.

13. Laserbearbeitungsprogramm nach Anspruch 12, wobei das Laserbearbeitungsprogramm ausführt:
Veranlassen, dass eine Steuereinheit (53) einen Zweifach-Bearbeitungsprozess durchführt, in dem die erste Zelle mit dem Laserstrahl (L) in der ersten Richtung bestrahlt wird und dann die erste Zelle mit dem Laserstrahl (L) wieder in der zweiten Richtung bestrahlt wird.

## Revendications

1. Machine de traitement par laser (1) conçue pour graver, dans une surface d'une pièce (W), un code bidimensionnel de type matrice dans lequel une première cellule, constituant une zone d'irradiation unitaire, et une deuxième cellule, constituant une zone de non-irradiation unitaire, sont disposées selon un motif en réseau souhaité dans une première direction et une seconde direction orthogonale à la première direction, la machine de traitement par laser (1) comprenant :
une tête de traitement par laser (30) conçue pour irradier la pièce (W) avec un faisceau laser (L) ;
un mécanisme de déplacement (20) conçu pour déplacer le faisceau laser (L) rayonné par la tête de traitement par laser (30) dans la première direction ; et
une unité de commande (53),
**caractérisée par**
un mécanisme de vibration de faisceau (32) conçu pour faire vibrer le faisceau laser (L), dans laquelle
le mécanisme de déplacement (20) est en outre conçu pour déplacer le faisceau laser (L) rayonné par la tête de traitement par laser (30) dans la seconde direction ; et
l'unité de commande (53) est conçue pour commander le mécanisme de déplacement (20) afin de déplacer le faisceau laser (L) le long de l'une ou l'autre parmi la première direction ou la seconde direction tout en utilisant le mécanisme de vibration de faisceau (32) pour faire vibrer le faisceau laser (L) le long de l'autre direction parmi la première direction ou la seconde direction, et
la machine de traitement par laser (1) est conçue pour irradier chaque première cellule avec le faisceau laser (L) le long de l'une et l'autre parmi la première direction et la seconde direction.

2. Machine de traitement par laser (1) selon la revendication 1, dans laquelle
l'unité de commande (53) est conçue pour commander le mécanisme de déplacement (20) de telle sorte que la première cellule soit irradiée par le faisceau laser (L) le long de la première direction puis irradiée de nouveau par le faisceau laser (L) le long de la seconde direction.

3. Machine de traitement par laser (1) selon la revendication 1 ou 2, dans laquelle
le code bidimensionnel de type matrice présente un motif en réseau de n lignes et m colonnes (où n et m sont des entiers supérieurs ou égaux à 2), et
l'unité de commande (53) est conçue pour commander le mécanisme de déplacement (20) pour : irradier, avec le faisceau laser (L), des premières cellules dans une j^{ième} colonne (où j est un entier supérieur ou égal à 1 et inférieur à m) le long d'une première direction avant, puis irradier, avec le faisceau laser (L), des premières cellules dans une colonne autre que la j^{ième} colonne le long d'une première direction inverse ; et irradier, avec le faisceau laser (L), des premières cellules dans une i^{ème} ligne (où i est un entier supérieur ou égal à 1 et inférieur à n) le long d'une seconde direction inverse, puis irradier, avec le faisceau laser (L), des premières cellules dans une ligne autre que la i^{ème} ligne le long d'une seconde direction avant.

4. Machine de traitement par laser (1) selon la revendication 1 ou 2, dans laquelle
le code bidimensionnel de type matrice présente un motif en réseau de n lignes et m colonnes (où n et m sont des entiers supérieurs ou égaux à 2), et
l'unité de commande (53) est conçue pour commander le mécanisme de déplacement (20) pour : irradier, avec le faisceau laser (L), des premières cellules dans une j^{ième} colonne (où j est un entier supérieur ou égal à 1 et inférieur à m) le long d'une première direction avant, puis irradier, avec le faisceau laser (L), des premières cellules dans une colonne autre que la j^{ième} colonne le long de la première direction avant ; et irradier, avec le faisceau laser (L), des premières cellules dans une i^{ème} ligne (où i est un entier supérieur ou égal à 1 et inférieur à n) le long d'une seconde direction inverse, puis irradier, avec le faisceau laser (L), des premières cellules dans une ligne autre que la i^{ème} ligne le long de la seconde direction inverse.

5. Machine de traitement par laser (1) selon la revendication 1 ou 2, dans laquelle
le code bidimensionnel de type matrice présente un motif en réseau de n lignes et m colonnes (où n et m sont des entiers supérieurs ou égaux à 2), et
l'unité de commande (53) est conçue pour commander le mécanisme de déplacement (20) pour : irradier, avec le faisceau laser (L), des premières cellules dans une j^{ième} colonne (où j est un entier supérieur ou égal à 1 et inférieur à m) le long de la première direction avant, puis irradier, avec le faisceau laser (L), des premières cellules dans une i^{ème} ligne (où i est un entier supérieur ou égal à 1 et inférieur à n) le long de la seconde direction ;
et irradier, avec le faisceau laser (L), des premières cellules dans une colonne autre que la j^{ième} colonne le long de la première direction, puis irradier, avec le faisceau laser (L), des premières cellules dans une ligne autre que la i^{ème} ligne le long de la seconde direction.

6. Machine de traitement par laser (1) selon la revendication 1 ou 2, dans laquelle
le code bidimensionnel de type matrice présente un motif en réseau de n lignes et m colonnes (où n et m sont des entiers supérieurs ou égaux à 2), et
l'unité de commande (53) est conçue pour commander le mécanisme de déplacement (20) pour : irradier, avec le faisceau laser (L), des premières cellules dans une j^{ième} colonne (où j est un entier supérieur ou égal à 1 et inférieur à m) le long d'une première direction avant, puis irradier, avec le faisceau laser (L), des premières cellules dans une (i + 1)^{ième} ligne (où i est un entier supérieur ou égal à 1 et inférieur à n) le long d'une seconde direction avant ; et irradier, avec le faisceau laser (L), des premières cellules dans la (j + 1)^{ième} colonne le long de la première direction avant, puis irradier, avec le faisceau laser (L), des premières cellules dans la i^{ème} ligne le long de la seconde direction avant.

7. Machine de traitement par laser (1) selon la revendication 1 ou 2, dans laquelle
le code bidimensionnel de type matrice présente un motif en réseau de n lignes et m colonnes (où n et m sont des entiers supérieurs ou égaux à 2), et
l'unité de commande (53) est conçue pour commander le mécanisme de déplacement (20) pour : irradier, avec le faisceau laser (L), des premières cellules dans une j^{ième} colonne (où j est un entier supérieur ou égal à 1 et inférieur à m) le long d'une première direction avant, puis irradier, avec le faisceau laser (L), des premières cellules dans une (i + 1)^{ième} ligne (où i est un entier supérieur ou égal à 1 et inférieur à n) le long d'une seconde direction avant ; et irradier, avec le faisceau laser (L), des premières cellules dans la (j + 1)^{ième} colonne le long d'une première direction inverse, puis irradier, avec le faisceau laser (L), des premières cellules dans la i^{ème} ligne le long d'une seconde direction inverse.

8. Machine de traitement par laser (1) selon l'une quelconque des revendications 1 à 7, dans laquelle
le mécanisme de vibration de faisceau (32) est conçu pour faire vibrer le faisceau laser (L) dans une direction orthogonale à une direction de déplacement du faisceau laser (L).

9. Machine de traitement par laser (1) selon l'une quelconque des revendications 1 à 7, dans laquelle
le mécanisme de vibration de faisceau (32) est conçu pour faire vibrer le faisceau laser (L) dans une direction de déplacement du faisceau laser (L) et une direction orthogonale à la direction de déplacement du faisceau laser (L).

10. Procédé de traitement par laser permettant de graver, dans une surface d'une pièce (W), un code bidimensionnel de type matrice dans lequel une première cellule, constituant une zone d'irradiation unitaire, et une deuxième cellule, constituant une zone de non-irradiation unitaire, sont disposées selon un motif en réseau souhaité dans une première direction et une seconde direction orthogonale à la première direction, le procédé de traitement par laser étant **caractérisé en ce qu'**il comprend :
le déplacement d'un faisceau laser (L) le long de l'une parmi la première direction ou la seconde direction tout en faisant vibrer le faisceau laser (L) le long de l'autre parmi la première direction ou la seconde direction et l'irradiation de chaque première cellule avec le faisceau laser (L) le long des deux parmi la première direction et la seconde direction.

11. Procédé de traitement par laser selon la revendication 10, dans lequel
la première cellule est irradiée avec le faisceau laser (L) le long de la première direction puis irradiée de nouveau avec le faisceau laser (L) le long de la seconde direction.

12. Programme de traitement par laser permettant de graver, dans une surface d'une pièce (W), un code bidimensionnel de type matrice dans lequel une première cellule, constituant une zone d'irradiation unitaire, et une deuxième cellule, constituant une zone de non-irradiation unitaire, sont disposées selon un motif en réseau souhaité dans une première direction et une seconde direction orthogonale à la première direction, le programme de traitement par laser étant **caractérisé par** :
le fait d'amener l'unité de commande (53) de la machine de traitement par laser (1) selon l'une quelconque des revendications 1 à 9 à effectuer un traitement de gravure par déplacement d'un faisceau laser (L) le long de l'une parmi la première direction ou la seconde direction tout en faisant vibrer le faisceau laser (L) le long de l'autre parmi la première direction ou la seconde direction et l'irradiation de chaque première cellule avec le faisceau laser (L) le long des deux parmi la première direction et la seconde direction.

13. Programme de traitement par laser selon la revendication 12, le programme de traitement par laser :
amenant une unité de commande à effectuer un traitement en deux temps pour irradier la première cellule avec le faisceau laser (L) le long de la première direction puis irradier de nouveau la première cellule avec le faisceau laser (L) le long de la seconde direction.
